# EUROPEAN PATENT SPECIFICATION

(11) **EP 1 361 487 B1**
(45) Date of publication and mention of the grant of the patent: **12.07.2006**
(21) Application number: 03010480.6
(22) Date of filing: 09.05.2003
(51) Int. Cl.: G05B 19/414

(54) **Apparatus and method for motor control**
Vorrichtung und Verfahren zur Motorsteuerung
Dispositif et procédé de commande de moteurs

(30) Priority: 10.05.2002 JP 2002136239
(43) Date of publication of application: 12.11.2003
(73) Proprietor: SEIKO EPSON CORPORATION, Shinjuku-ku, Tokyo 163-0811 (JP)
(72) Inventor: Takei, Toshiki, Suwa-shi, Nagano-ken 392-8501 (JP)
(74) Representative: Hoffmann, Eckart

(56) References cited:
- EP-A- 0 144 843
- EP-A- 1 154 382
- WO-A-98/13208
- US-A- 5 272 430

## Description

The present invention relates to an apparatus and a method for serially transferring motor control data to a drive device for driving a motor.

Controlling a motor in a printer, for example, is conventionally done by sending motor control data from a CPU to a motor drive device. Two types of data transmission paths can be used to send the motor control data, parallel and serial. Serial communication is preferable costwise because it requires fewer transmission lines, and serial communication is therefore widely used.

The motor control data sent from the CPU to the drive device typically consists of one or more types of basic control data, also referred to as data elements herein. To control a stepping motor, for example, the data elements include phase pattern data indicating the phase pattern of the voltage to be applied to the motor, and current data indicating the current to be applied. The drive device for the motor receives motor control data containing these data elements in a specific format, and drives the motor accordingly. Therefore, to send the motor control data to the drive device, the CPU must serially transfer the control data after producing them in the format suitable for the particular drive device based on the phase pattern data, phase current data, and other data elements that may be required.

The motor control data has conventionally been generated through an operating process run by the CPU. After writing the data elements to respective data buffers, the CPU runs the process to generate the motor control data, and then passes the resulting data to another circuit for serial transfer to the motor drive device. This process must be run every time data in a data buffer is updated, and this puts a significant processing load on the CPU.

Furthermore, because the control data generating process must be run in response to basic control data being updated in the data buffers (that is, in response to data is written to a data buffer), the CPU must be aware of such data updating. This means that data elements cannot be written to the data buffers by direct memory access (DMA), bypassing the CPU. The CPU must also handle the writing of data elements to the data buffers, which further increases the processing load on the CPU.

A motor control apparatus according to the pre-characterizing portion of claim 1 is known from EP 0 144 843 A2. in this prior art basic motor control data is sent byte by byte via DMA from a RAM to a FIFO buffer. In response to a byte being available from the FIFO buffer a first counter is set to the value the byte. The first counter sets a flip flop whose output supplies the motor control data as sequence of pulses. The first counter counts the negative phase of these pulses and a second counter counts the positive phase.

The document WO98/13208 discloses a motor control apparatus in which a counter is repeatedly pre-set to a respective value that is supplied via DMA from a memory. Each time the counter counted a number of pulses corresponding to the respective pre-set value it outputs a command causing a step motor to move by one step. This causes the print head of a printer to be moved correspondingly.

An object of the invention is to provide an apparatus and a method for generating the motor control data to be sent to the drive device for driving a motor and for serially transferring the motor control data to the drive device without adding to the processing load of the CPU.

This object is achieved by a motor control apparatus as claimed in claim 1 and a method as claimed in claim 10.

In accordance with the invention basic control data is thus transferred to data buffers by direct memory access (DMA), and the motor control data compiled by means of a hardware circuit based on the basic control data stored in the data buffer. The motor control data is then serially transferred the drive device. The motor control data can therefore be compiled and serially transferred without requiring additional processing power of the CPU.

Other objects and attainments together with a fuller understanding of the invention will become apparent and appreciated by referring to the following description of preferred embodiments taken in conjunction with the accompanying drawings.
- Fig. 1: is a schematic block diagram showing a first embodiment of the present invention;
- Fig. 2: is a schematic diagram showing in detail the data composition and transmission circuit of a control apparatus according to a preferred embodiment of the invention;
- Fig. 3: shows a typical stepping motor phase arrangement;
- Fig. 4: shows examples of voltage waveforms applied to each phase of the stepping motor;
- Fig. 5: is a state transition diagram describing operation of the sequencer circuit according to a preferred embodiment of the invention;
- Fig. 6: shows the relationship between basic control data stored in the data buffer and motor control data compiled by the sequencer circuit and stored in the shift register, according to a second embodiment of the invention;
- Fig. 7: shows the relationship between basic control data stored in the data buffer and motor control data compiled by the sequencer circuit and stored in the shift register, according to a third embodiment of the invention;
- Fig. 8: is a schematic block diagram showing the configuration of a third embodiment of the invention;
- Fig. 9: shows the relationship between basic control data stored in the data buffer and motor control data compiled by the sequencer circuit and stored in the shift register, according to a fourth embodiment of the invention;
- Fig. 10: is a timing chart showing the operation of the sequencer circuit in the fourth embodiment;
- Fig. 11: shows the configuration of the control apparatus according to a fifth embodiment of the present invention;

- Fig. 12: is a timing chart showing the operation of the sequencer circuit in the fifth embodiment;
- Fig. 13: is a state transition diagram showing the operation of the sequencer circuit in the fifth embodiment;
- Fig. 14: is a timing chart for a case where the priority of the data buffers is changed in Fig. 12; and
- Fig. 15: shows the relationship between basic control data stored in data buffers BF1 - BF4 and motor control data compiled by the sequencer circuit based and stored in the shift register, according to a sixth embodiment of the present invention.

Preferred embodiments of the present invention are described below with reference to the accompanying figures.

### Embodiment 1

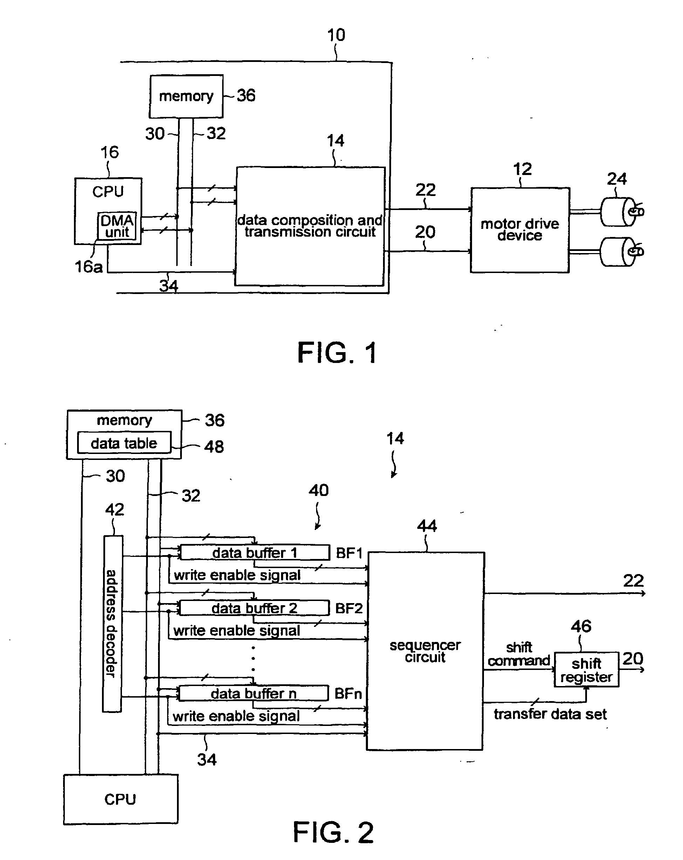

Fig. 1 shows the configuration of a first embodiment of the present invention. As shown in Fig. 1 a control system has a control apparatus 10 according to this embodiment of the invention and a motor drive device 12. The control apparatus 10 has a data composition and transmission circuit 14 (simply referred to as DCT circuit hereinafter) and a CPU 16. The control apparatus 10 can be constructed as a single-chip device using, for example, an ASIC.

The DCT circuit 14 is connected to the motor drive device 12 through a serial transfer line 20 and a synchronization clock line 22. The motor drive device 12 controls one or more stepping motors 24 based on motor control data serially transferred from the DCT circuit 14 via the serial transfer line 20.

Inside the control apparatus 10 the DCT circuit 14 is connected to an address bus 30, a data bus 32, and a write signal line 34 of the CPU 16. A specified write signal is output to the write signal line 34 when something is to be written to a memory 36. A write signal, a write address, and write data are therefore supplied to the DCT circuit 14 when data are to be written to memory 36. The CPU 16 has a DMA function enabling data transfers between memory units by means of DMA unit 16a without requiring the data to pass through an operating process of the CPU 16.

Fig. 2 shows the configuration of the DCT circuit 14 in detail. As shown in Fig. 2, the DCT circuit 14 has a data buffer unit 40, an address decoder 42, a sequencer circuit 44, and a shift register 46. The data buffer unit 40 comprises n data buffers BF1 - BFn. The data buffers BF1 - BFn are for storing basic data from which the motor control data to be sent to the motor drive device 12 is generated. The basic control data stored in the data buffers BF1 - BFn is referred to below as "data elements". These data elements include, for example, phase pattern data (data representing the voltage pattern to be applied in each phase to the stepping motor 24) and setting data (such as phase current data indicating the current to be supplied to the stepping motor 24 and various settings to be applied to the motor drive device 12).

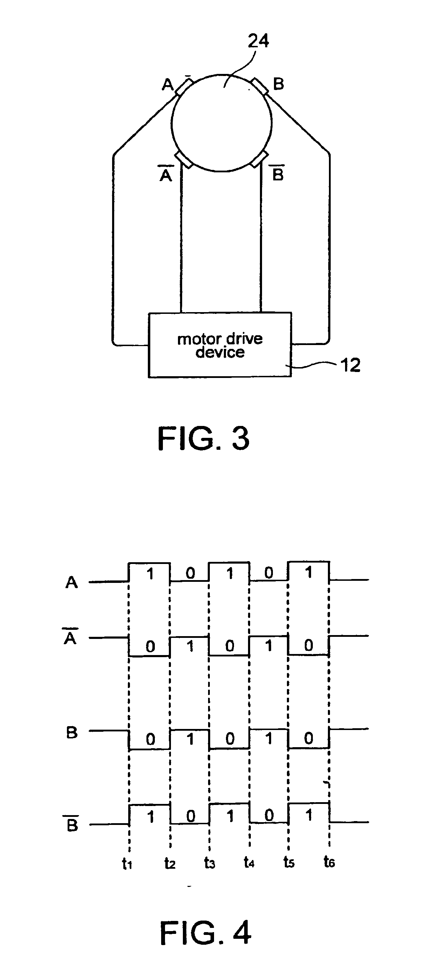

The phase pattern of the stepping motor 24 is described next. Fig. 3 shows the phase arrangement of a typical stepping motor 24, and Fig. 4 shows an example of the voltage waveform applied to each phase.

In the example shown in Fig. 3 the stepping motor 24 has the four phases A,-A,B,-B, and is driven by changing the voltage applied to each of these phases as shown in Fig. 4. The phase pattern data is data denoting the pattern, that is, 1 (HIGH) or 0 (LOW), of the voltage applied to the individual phases during respective time segments. As shown in Fig. 4, for example, during time segment t2-t1 the phase pattern data is [1,0,0,1], during time segment t3-t2 it is [0,1,1,0], during time segment t4-t3 it is [1,0,0,1], etc..

As is well known, the torque produced by the stepping motor 24 depends on the current flowing in each phase (the phase current), and the phase current data indicates the phase current to be applied. That is, the current supplied to the stepping motor 24 is controlled by the phase current data to achieve a specific torque according to the desired acceleration/deceleration drive pattern of the stepping motor 24.

The CPU 16 produces the data elements such as the phase pattern data and setting data as noted above according to the desired drive pattern of the stepping motor 24, and stores the data elements in a data table 48 provided at a specific address area in memory 36. The data elements stored in this data table 48 are transferred by DMA to the appropriate data buffers BF1 - BFn by the DMA unit 16a. More specifically, respective memory addresses are allocated to data buffers BF1 - BFn, and as further described below when data elements are transferred by DMA to any of these memory addresses those data elements are written into the corresponding data buffer BF1 - BFn.

As shown in Fig. 2, the address decoder 42 is connected to the address bus 30 of CPU 16. Each data buffer BF1 - BFn is also connected to the data bus 32 and to the write signal line 34 of CPU 16. As noted above each data buffer BF1 - BFn is allocated to a respective memory address, and the address decoder 42 decodes the write address output to the address bus 30 and outputs a write enable signal to the data buffer BF1 - BFn corresponding to the decoded address. The data output to data bus 32 is written to the respective data buffer BF1 - BFn when a write enable signal is output from the address decoder 42 and a write signal is output to the write signal line 34. Therefore, when data elements are sent by DMA to a memory address assigned to any of the data buffers BF1 - BFn, the data elements are stored in the specified data buffer.

The write enable signal applied to the data buffers BF1 - BFn is also supplied to the sequencer circuit 44. Triggered by the write enable signal output to any of the data buffers, the sequencer circuit 44 compiles the motor control data for the stepping motor 24 from the data elements stored in the data buffers BF1 - BFn, and writes this control data to the shift register 46. More specifically, a specific correlation exists according to the specifications of the motor drive device 12 between each bit position of the data elements and each bit position of the motor control data, for example, and the sequencer circuit 44 outputs each bit value of the data elements to the corresponding bit position in the shift register 46.

After having been written to the shift register 46, the motor control data is sent bit by bit to the motor drive device 12 by outputting a shift command to the shift register 46 synchronized to the clock signal.

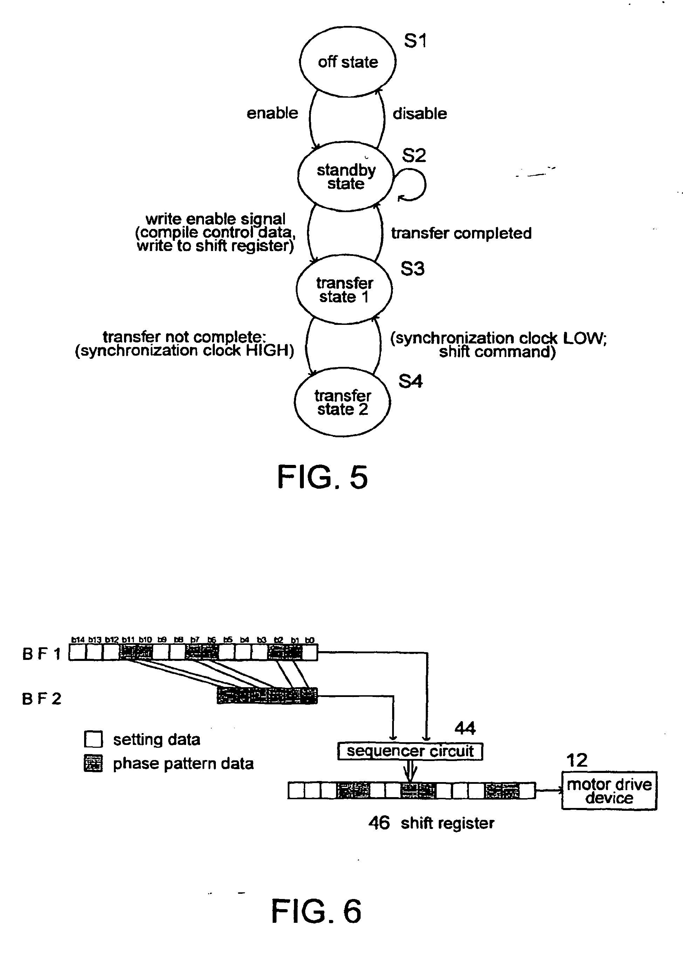

Fig. 5 is a state transition diagram showing the operation of the sequencer circuit 44. The sequencer circuit 44 can be functionally enabled and disabled by external input. When functionally enabled while in the off state S1, it shifts to the standby state S2. If functionally disabled while in this standby state S2, it returns to the off state S1.

If output of a write enable signal to any data buffer BF1 - BFn is detected in the standby state S2, the motor control data is written to the shift register 46 based on the value of each data element stored in the data buffers BF1 - BFn, and control goes to a first transfer state S3.

The synchronization clock is set HIGH in the first transfer state S3 and control goes to a second transfer state S4. In the second transfer state S4 the synchronization clock is set LOW and a shift command is sent to the shift register 46. This causes one bit of the motor control data in the shift register 46 to be sent to the serial transfer line 20 synchronized to the transition of the synchronization clock of the synchronization clock line 22 going LOW. The first transfer state S3 is resumed when this process ends. If data transfer of all bits from the shift register is completed, standby state S2 is resumed, but if data transfer is not completed the synchronization clock is set LOW and control goes to the second transfer state S4.

When a write enable signal is supplied to any of the data buffers BF1 - BFn (that is, when new data elements are to be stored in any of the data buffers BF1 - BFn), the sequencer circuit 44 is thereby triggered to compile motor control data in hardware and serially send the data to the motor drive device 12. Because the CPU 16 is therefore not required to compile or serially transfer the motor control data, data elements can be stored by DMA in the data buffers BF1 - BFn and at the same time motor control data composed and serially transferred based on new data elements.

In other words, because it is necessary to detect when motor control data need to be generated (i.e., when data was written to any of the data buffers BF1 - BFn) and to run the motor control data generation process at that time, if the control data generation and transfer process is handled by the CPU 16, data cannot be stored in data buffers BF1 - BF4 by DMA bypassing the CPU 16.

With this embodiment of the present invention, however, a sequencer circuit 44 compiles the motor control data in hardware triggered by data being written to data buffers BF1 - BFn. The CPU 16 therefore does not need to detect the timing of data being written to the data buffers BF1 - BFn, and data can therefore be written by DMA to the data buffers BF1 - BFn and the motor control data composed and serially transferred based on supplied data elements.

### Embodiment 2

A second embodiment of the present invention is described next below. It should be noted that the embodiments described below are basically configured identically to the first embodiment described above, like parts are therefore identified by like reference numerals, and further description thereof is either omitted or simplified.

This second embodiment of the invention has two data buffers BF1 and BF2 in the configuration of the first embodiment described above. Data in the format of the motor control data itself is stored as the data elements in data buffer BF1, and phase pattern data is stored as the data elements in data buffer BF2.

Fig. 6 shows the relationship between data elements stored in data buffers BF1 and BF2 in the present embodiment, and the motor control data compiled by the sequencer circuit 44 based on these data elements and stored in the shift register 46. As shown in the figure, data is stored with the same format as the motor control data in data buffer BF1. That is, the bits representing the phase pattern data and the bits representing the setting data are written to specific bit positions according to the control data format. In the example shown in Fig. 6, bits b1, b2, b6, b7, b10, b11 in data buffer BF1 (gray-shaded) represent the bit positions of phase pattern data, and the other bits b0, b3, b4, b5, b8, b9, b12, b13, b14 represent the bit positions for the setting data. The motor control data is thus formatted with the bits denoting the set values distributed amongst the bits representing the phase pattern data.

Therefore, when data is written to data buffer BF1, the sequencer circuit 44 directly outputs that data as the motor control data to the shift register 46. However, when phase pattern data is written to data buffer BF2, sequencer circuit 44 overwrites the bit values at bit positions b1, b2, b6, b7, b10, b11 by the phase pattern data from data buffer BF2, and the values of other bits from data buffer BF1 corresponding to the setting data remain unchanged.

This embodiment of the invention thus has a data buffer BF1 for storing a complete set of motor control data and a data buffer BF2 for storing only the phase pattern data. When new phase pattern data is written to data buffer BF2 the sequencer circuit 44 updates the bits corresponding to the phase pattern data in the motor control data and serially transfers the updated motor control data.

As in the first embodiment described above motor control data can be compiled and serially transferred while data elements are being written by DMA to data buffer BF1 and data buffer BF2.

Furthermore, as described in the first embodiment a data table 48 for transferring the data elements to data buffer BF1 and data buffer BF2 must be reserved in memory 36. While the phase pattern data must be changed at short intervals in conjunction with the operation of stepping motor 24 and the frequency of this change is therefore great, the setting data is changed much less frequently.

Therefore, if the data to be sent to data buffer BF1 is stored in the data table 48 as the data used each time the phase pattern data changes, the same bit values repeat for settings that do not change, and available memory is used inefficiently.

In this embodiment, however, it is sufficient to reserve a small data table 48 (for storing only 6 bits in this embodiment) that is just large enough to store the number of bits in data buffer BF2 used to store only the frequently changing phase pattern data, and as to sized for data buffer BF1 (larger **size, i.e., 15 bits in this embodiment) store only the data that the setting data is each changed. As a** result, the amount of memory required for the data table 48 can be greatly reduced.

Furthermore, because the motor control data can be compiled by the sequencer circuit 44 outputting the bits from data buffer BF1 and data buffer BF2 to the corresponding bit positions in the shift register 46, the sequencer circuit 44 can be simplified and the cost of the control apparatus 10 can therefore be reduced. When the phase pattern data bits are dispersed in the control data as in the present embodiment, for example, the sequencer circuit 44 can be simplified by simply using appropriate logic circuits corresponding to these bit positions.

### Embodiment 3

A third embodiment of the present invention is described next. In this embodiment two stepping motors 24A and 24B are driven by the motor drive device 12, and three data buffers BF1 to BF3 are used.

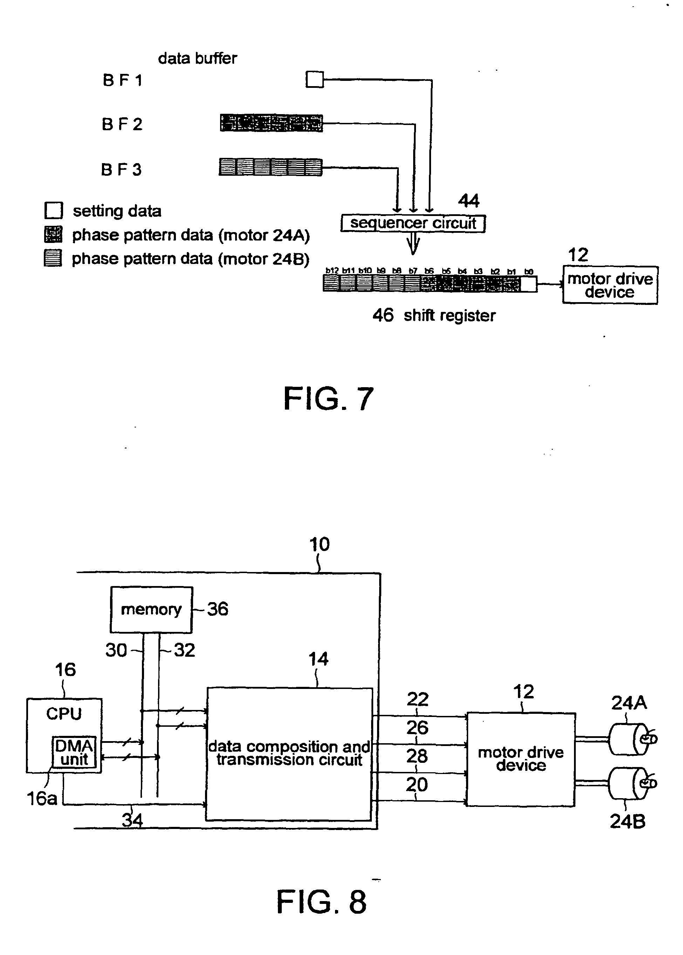

Fig. 7 shows the relationship between data elements stored in data buffers BF1 to BF3 in this embodiment and the motor control data stored in the shift register 46 by the sequencer circuit 44 based on the data stored in the data buffers. As shown in the figure setting data common to stepping motors 24A and 24B is stored in data buffer BF1, and phase pattern data for stepping motor 24A and stepping motor 24B, respectively, is stored in data buffers BF2 and BF3. When data is written to any of data buffers BF1 to BF3, the sequencer circuit 44 produces the motor control data by outputting each bit in data buffers BF1 to BF3 to the corresponding bit position in shift register 46. In the example shown in Fig. 7 the setting data from data buffer BF1 is output to bit b0 of the shift register, the phase pattern data from data buffer BF2 is output to bits b1 to b6, and the phase pattern data from data buffer BF3 is output to bits b7 to b12.

Motor control data transferred to the motor drive device 12 in the present embodiment contains phase pattern data for both stepping motors 24A and 24B.

As a result, when the phase pattern data changes for either stepping motor 24A or stepping motor 24B, it is necessary to produce motor control data based on the data elements from the three data buffers BF1 to BF3, including those for the other stepping motor which have not changed.

When data is written to any data buffer BF1 to BF3 in the present embodiment, the sequencer circuit 44 therefore compiles and serially transfers motor control data based on the data elements stored in the three data buffers BF1 to BF3. To control two stepping motors 24A and 24B, the CPU 16 therefore simply writes phase pattern data to a data table for each time the phase pattern changes for each stepping motor 24A and 24B. Thereafter, the data is transferred to the appropriate data buffers by DMA from the data tables, and the sequencer circuit 44 produces and serially transfers the motor control data to the motor drive device 12 from the data in the data buffers. The CPU 16 can therefore simply generate the phase pattern data by running separate processes for each motor without considering the relationship between the stepping motors 24A and 24B, and the process run by the CPU 16 can therefore be simplified.

This embodiment of the invention can therefore appropriately produce and serially transfer motor control data to a motor drive device 12 for driving multiple stepping motors 24A and 24B based on common basic control data without burdening the CPU 16.

### Embodiment 4

A fourth embodiment of the present invention is described next with reference to Fig. 8, a schematic diagram showing the configuration of the present embodiment.

As shown in the figure two stepping motors 24A and 24B are driven by a common motor drive device 12 as in the third embodiment. This embodiment differs, however, by having a first selection line 26 and a second selection line 28 in addition to the serial transfer line 20 and synchronization clock line 22 between the control apparatus 10 and motor drive device 12.

These two selection lines 26 and 28 are used to specify whether the motor control data transferred over the serial transfer line 20 is for stepping motor 24A or stepping motor 24B. That is, if the first selection line 26 is ACTIVE, the motor drive device 12 drives stepping motor 24A based on the motor control data received over the serial transfer line 20, but if the second selection line 28 is ACTIVE, it drives stepping motor 24B based on the motor control data sent over the serial transfer line 20.

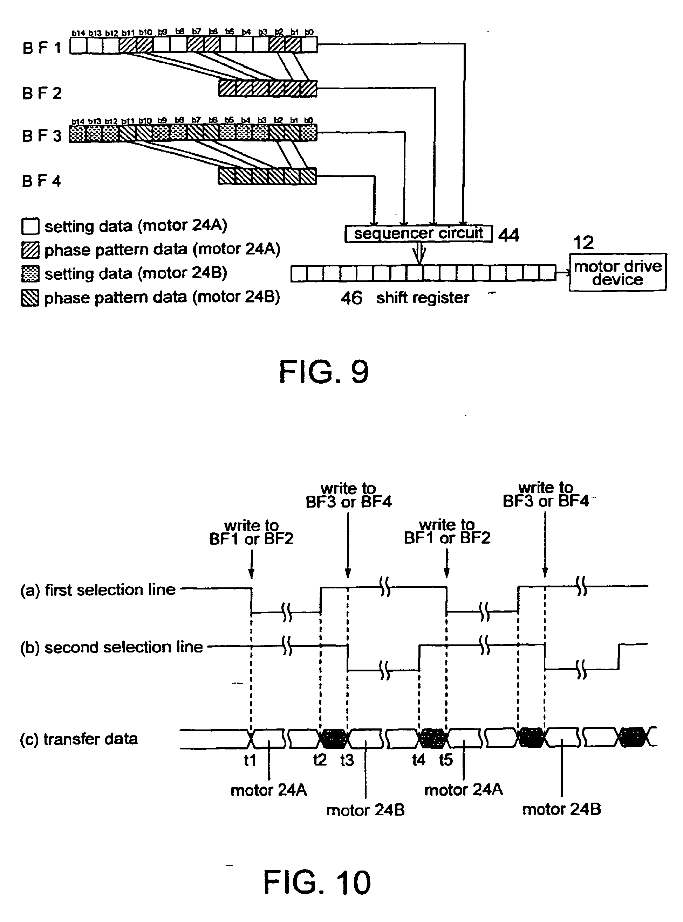

Fig. 9 shows the relationship between the data elements stored in data buffers BF1 to BF4 in this embodiment and the motor control data produced by the sequencer circuit 44 based on the data in the data buffers and stored in the shift register 46. As shown in the figure, this embodiment of the invention has four data buffers BF1 to BF4. Like the case shown in Fig. 6, data formatted identically to the motor control data is stored in data buffer BF1 and the phase pattern data is stored in data buffer BF2 for stepping motor 24A. Likewise, data formatted identically to the motor control data is stored in data buffer BF3 and the phase pattern data is stored in data buffer BF4 for stepping motor 24B.

Fig. 10 is a timing chart showing the operation of the sequencer circuit 44 in the present embodiment. Fig. 10 (a) shows signals on the first selection line 26, (b) shows signals on the second selection line 28, and (c) shows the data transferred over serial transfer line 20.

Referring to Fig. 10, when data is written to data buffer BF1 or BF2 for stepping motor 24A at time t1, the sequencer circuit 44 sets first selection line 26 ACTIVE (LOW in the example shown in Fig. 10). If data was written to data buffer BF1, the data is output directly to the shift register 46. If data is written to data buffer BF2, the sequencer circuit 44 has each bit of the buffered data overwrite the corresponding bit in the shift register 46 (i.e., bits b1, b2, b6, b7, b10, b11). The data written to the shift register 46 is then serially transferred to the motor drive device 12 as the motor control data for stepping motor 24A. When all control data bits have been transferred at time t2, the sequencer circuit 44 sets the first selection line 26 INACTIVE (HIGH in this example).

Motor control data for stepping motor 24A is thus sent via the serial transfer line 20 when data is written to either of the data buffers BF1 and BF2 for stepping motor 24A. It should be noted that the motor drive device 12 drives stepping motor 24A based on the serially transferred motor control data because the first selection line 26 is ACTIVE.

Furthermore, when data is written to either data buffer BF3 or BF4 for stepping motor 24B at time t3, the sequencer circuit 44 sets the second selection line 28 ACTIVE and compiles and serially transfers motor control data to the motor drive device 12 based on the data elements written to data buffer BF3 and BF4 as described above. When all control data bits have been transferred at time t4, the second selection line 28 is set INACTIVE. Because the second selection line 28 is ACTIVE while data is being transferred, the motor drive device 12 drives stepping motor 24B based on the received motor control data.

As described above, the sequencer circuit 44 in the present embodiment serially transfers motor control data to the motor drive device 12 according to whether data elements for stepping motor 24A or stepping motor 24B have changed (that is, whether a data element was written to data buffer BF1 or BF2, or to data buffer BF2 or BF4), and sets either first selection line 26 or second selection line 28 ACTIVE according to whether stepping motor 24A or 24B is to be driven.

The CPU 16 therefore only needs to prepare phase pattern data and setting data for each motor in corresponding data tables, and this data can thereafter be moved by DMA from the data tables to the appropriate data buffers BF1 to BF4 without involving the CPU 16. The sequencer circuit 44 then compiles and serially transfers motor control data to the motor drive device 12, and appropriately controls first selection line 26 or second selection line 28.

By thus configuring the motor drive device 12 so that the motor to be driven can be indicated by means of selection lines 26 and 28, motor control data can be produced and serially transferred, and selection lines 26 and 28 can be controlled, without involving the CPU 16.

### Embodiment 5

A fifth embodiment of the invention is described next. This embodiment of the invention can serially transfer motor control data appropriately without data transfer leaks even when data is written to one of the data buffers during serial transfer of control data.

As in the fourth embodiment above this embodiment of the invention uses data buffers BF1 and BF2 for stepping motor 24A, and data buffers BF3 and BF4 for stepping motor 24B, and indicates by means of a first selection line 26 and a second selection line 28 which motor is to be controlled by the transferred motor control data.

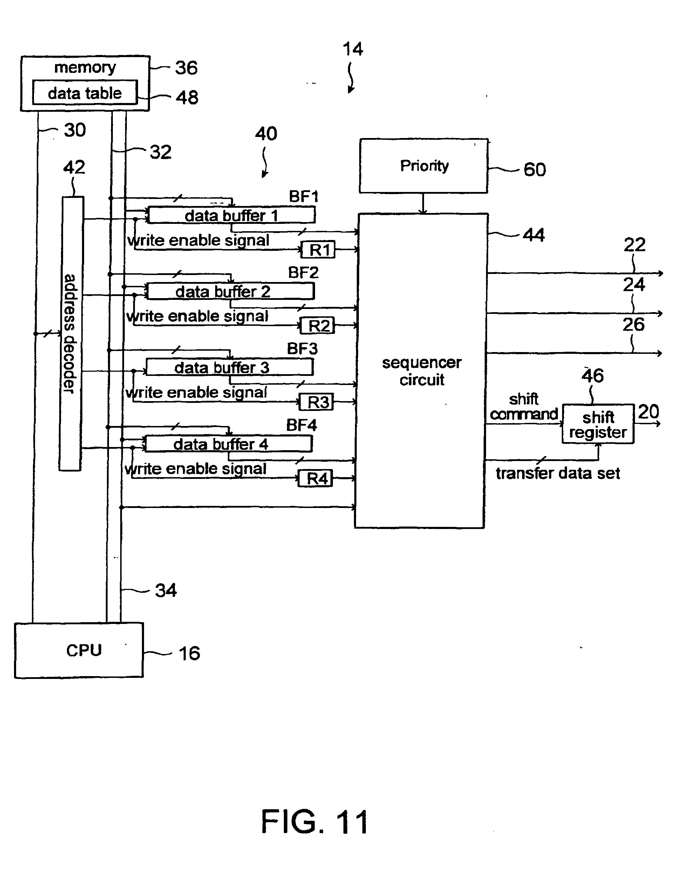

Fig. 11 shows the configuration of the control apparatus 10 in the present embodiment. As shown in the figure, this embodiment has transfer reservation hold circuits R1 - R4 (simply referred to as TRH circuits hereinafter) corresponding to data buffers BF1 to BF4, and a prioritizing circuit 60.

The TRH circuits R1 - R4 hold a TR (transfer reservation) flag for indicating whether motor control data based on data elements stored in data buffers BF1 to BF4 should be serially transferred. For example, if data elements is written to data buffer BF3 during serial transfer of motor control data for stepping motor 24A due to data elements having previously been written to data buffer BF1, motor control data for stepping motor 24B cannot be immediately serially transferred, and the TR flag is therefore set in TRH circuit R3. Then, when serial transfer of the motor control data for stepping motor 24A is completed, the motor control data for stepping motor 24B is compiled and serially transferred corresponding to the data buffer BF3 for which the TR flag was set.

Furthermore, the prioritizing circuit 60 holds the order of precedence controlling the order in which motor control data is compiled and serially transferred from the data buffers when data is written to multiple data buffers. For example, if data is written to data buffer BF2 and data buffer BF3 during serial transfer of motor control data for stepping motor 24A, and data buffer BF3 is set to a higher priority than data buffer BF2, motor control data will be compiled and serially transferred first for stepping motor 24B corresponding to the higher priority data buffer BF3 when the transfer of motor control data for stepping motor 24A is completed.

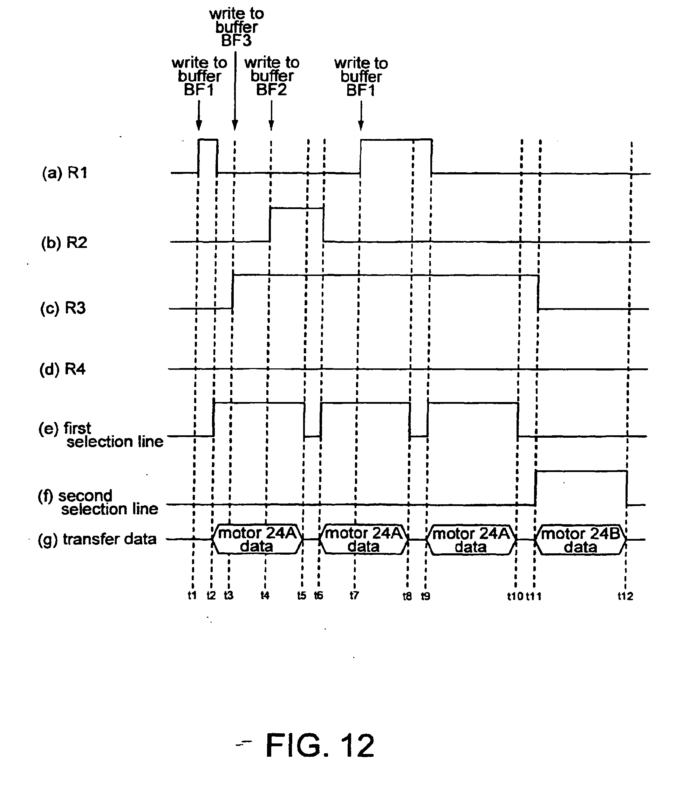

Fig. 12 is a timing chart showing the operation of the sequencer circuit 44 in the present embodiment. Fig. 12 (a) to (d) show the change in the TR flag set in TRH circuits R1 - R4 when data is written to data buffers BF1 to BF4, (e) and (f) show the signals output to the first selection line 26 and second selection line 28, respectively, and (g) shows the content of the serially transferred motor control data. Data buffers BF1, BF2, BF3, BF4 are set in this order from high (BF1) to low (BF4) priority in the prioritizing circuit 60.

In the example shown in the figure, data is written to data buffer BF1 and the TR flag is set accordingly in TRH circuit R1 at time t1. The highest priority is set to data buffer BF1, and because no motor control data is being transferred at this time the sequencer circuit 44 sets the first selection line 26 ACTIVE at time t2. The TR flag in TRH circuit R1 is also reset and serial transfer of motor control data for stepping motor 24A compiled from the data stored in data buffer BF1 starts. When this serial transfer ends, the first selection line 26 is set to INACTIVE at time t5.

During the above transfer of motor control data, data elements are written to data buffer BF3 at time t3, the TR flag is set in TRH circuit R3, and data elements are also written to data buffer BF2 at time t4. The TR flag is therefore also set in TRH circuit R2. Therefore, when the data transfer in progress ends (at time t5), the TR flag is set in both TRH circuits R2 and R3. Because data buffer BF2 is set to a higher priority than data buffer BF3, the sequencer circuit 44 processes data buffer BF2 first. That is, the TR flag for TRH circuit R2 is reset, first selection line 26 for data buffer BF2 is set ACTIVE, and motor control data for stepping motor 24A is compiled and serially transferred based on the data stored in data buffers BF1 and BF2 (at time t6).

When this serial transfer ends data is again written to data buffer BF1 and the TR flag in TRH circuit R1 is set (time t7). When that serial transfer ends (at time t8) the TR flag is again set in both TRH circuits R1 and R3, and because data buffer BF1 has a higher priority than data buffer BF3, motor control data compiled from the data in data buffers BF1 and BF2 for stepping motor 24A is again serially transferred (time t9). Because no new data is written to the data buffers before this serial transfer ends, only the TR flag in TRH circuit R3 is set when the transfer ends (time t10). The sequencer circuit 44 therefore starts to serially transfer motor control data compiled for stepping motor 24B based on the data in data buffers BF3 and BF4 at time t11, and the transfer ends at time t12.

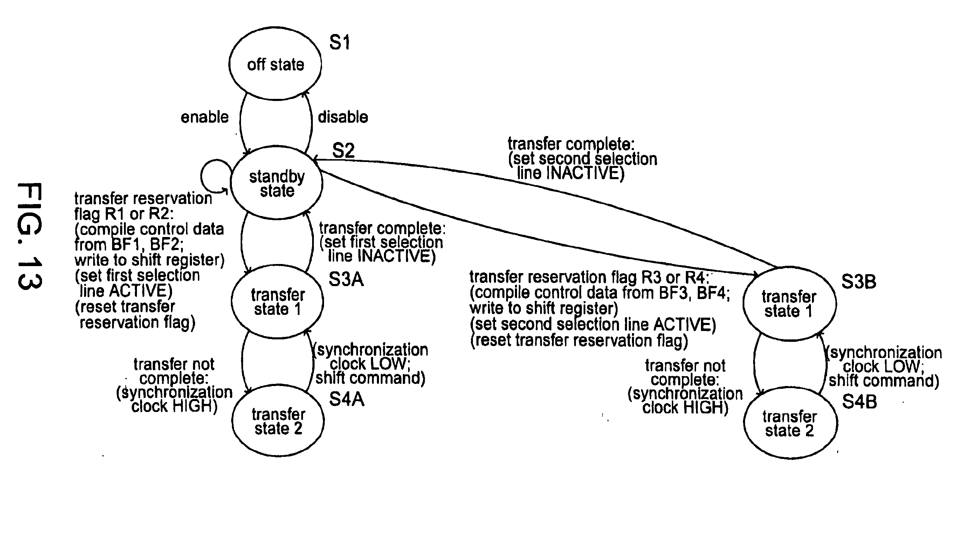

Fig. 13 is a state transition diagram describing the operation of the sequencer circuit 44 in the present embodiment. It should be noted that further description of those parts corresponding to the state transition diagram shown in Fig. 5 is omitted below.

If the TR flag is set for any one of the TRH circuits R1 - R4 in the standby state S2, motor control data is written to the shift register 46 based on the data stored in data buffers BF1 and BF2 if the flag is set in either of the highest priority TRH circuits R1 or R2, the first selection line 26 is set ACTIVE, the TR flag is reset, and control then goes to first transfer state S3A. However, if the TRH circuit with the highest priority in which the TR flag is set is R3 or R4, motor control data is written to the shift register 46 based on the data stored in data buffers BF3 and BF4, the second selection line 28 is set ACTIVE, the flag is reset, and control goes to first transfer state S3B.

In first transfer state S3A and S3B the synchronization clock is set HIGH and control goes respectively to second transfer state S4A and S4B. The synchronization clock is then set LOW in second transfer state S4A and S4B, and a shift command is applied to the shift register 46. Synchronized to the synchronization clock of the synchronization clock line 22 going LOW, the motor control data in shift register 46 is sent one bit at a time to the serial transfer line 20. When this process ends control returns to first transfer state S3A or S3B, respectively. If all bits have been transferred from the shift register in first transfer state S3A or S3B, first selection line 26 or second selection line 28, respectively, is set INACTIVE and control goes to standby state S2. If data transfer is not completed, the synchronization clock is again set LOW and control goes to second transfer state S4A or S4B.

It will thus be apparent that if data is written to any of data buffers BF1 to BF4 during the serial transfer of motor control data, a TR flag is set in a corresponding TRH circuit R1 - R4, and when the serial transfer ends, motor control data based on data in the data buffer for which the TR flag is set is automatically serially transferred. As a result, if data is written to any of data buffers BF1 to BF4 during serial data transfer, motor control data determined by the written data can be reliably serially transferred.

Furthermore, by prioritizing the data buffers BF1 to BF4, motor control data is transferred with precedence given to the data buffer with the highest priority when data is written to multiple data buffers while data transfer is in progress. This means that if, for example, there is a difference in the importance of the stepping motors 24A and 24B and one should be controlled with precedence over the other, control appropriate to the importance of the stepping motors 24A and 24B can be applied by setting the order in which the data buffers BF1 to BF4 should be processed according to this preferred precedence in the prioritizing circuit 60. Selection of the data buffers BF1 to BF4 based on this defined priority can then be handled in hardware by the sequencer circuit 44. Motor control determined by a defined priority can therefore be applied by the present embodiment without applying any processing load on the CPU 16.

It should be noted that this embodiment has been described respectively producing and serially transferring motor control data for stepping motor 24A based on data in data buffers BF1 and BF2 and motor control data for stepping motor 24B based on data in data buffers BF3 and BF4. The invention is not limited to this, however. For example, if four types of control data are serially transferred based on data stored in data buffers BF1 to BF4 and plural TR flags are set, comparable control can be achieved by serially transferring control data compiled from data in the data buffer with the highest priority.

Referring to the timing chart in Fig. 12, for example, control data based on data in data buffer BF1 is transferred from time t2 to t5, control data based on data in data buffer BF2 is transferred from time t6 to t8, control data based on data in data buffer BF1 is transferred from time t9 to t10, and control data based on data in data buffer BF3 is transferred from time t11 to t12.

It should be further noted that the preceding embodiment could also be configured so that the priority of the data buffers BF1 to BF4 held in prioritizing circuit 60 can be set by the CPU 16. This configuration provides greater flexibility and adaptability to system changes because the priority sequence can be set as needed when the system configuration is changed.

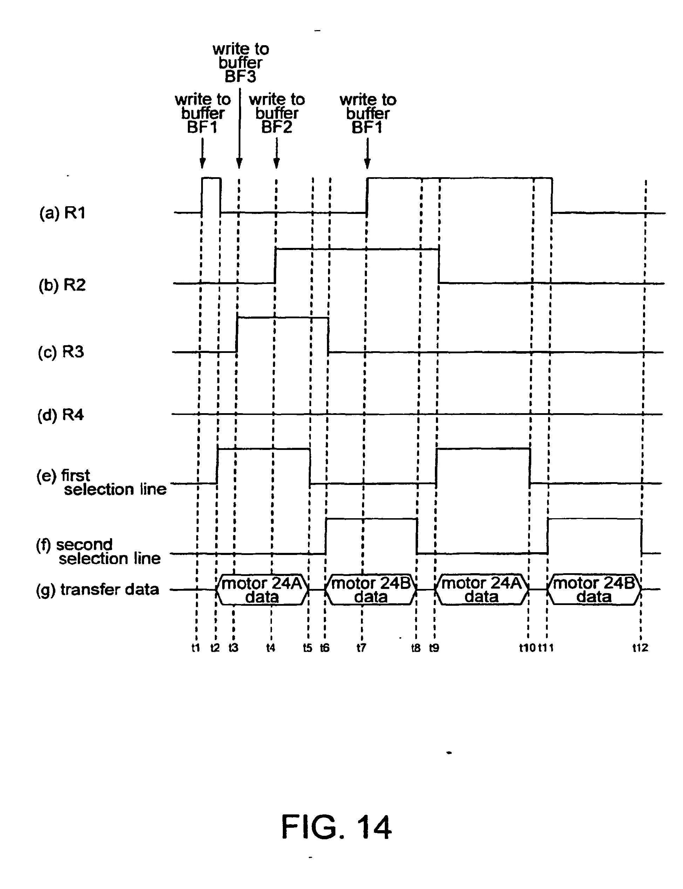

Fig. 14 is a timing chart describing operation when the priority sequence of the data buffers is changed from BF1 to BF4 in this order as described above to BF4 (highest priority), BF3, BF2, and BF1 (lowest priority). Data is written to the data buffers at the same times as those shown in Fig. 12.

When serial transfer of motor control data triggered by writing data to data buffer BF1 is completed at time t5, the TR flag is set in both TRH circuits R2 and R3. Because data buffer BF3 has higher priority than BF2 in this example, motor control data for stepping motor 24B based on data buffer BF3 is serially transferred and second selection line 28 is set ACTIVE. When this serial transfer ends (time t8), the TR flag is set in both TRH circuits R1 and R2. Because data buffer BF2 has higher priority than data buffer BF1 in this example, the TR flag in TRH circuit R2 is reset at time t9 and serial transfer of motor control data for stepping motor 24A corresponding to the data written to data buffer BF2 begins. When this data transfer ends the TR flag in TRH circuit R1 is reset (time t11) and transfer of motor control data for stepping motor 24A corresponding to the data written to data buffer BF1 begins.

### Embodiment 6

A sixth embodiment of the present invention is described next. In this embodiment the sequencer circuit 44 operates in any one of two modes, i.e., a first or a second operating mode.

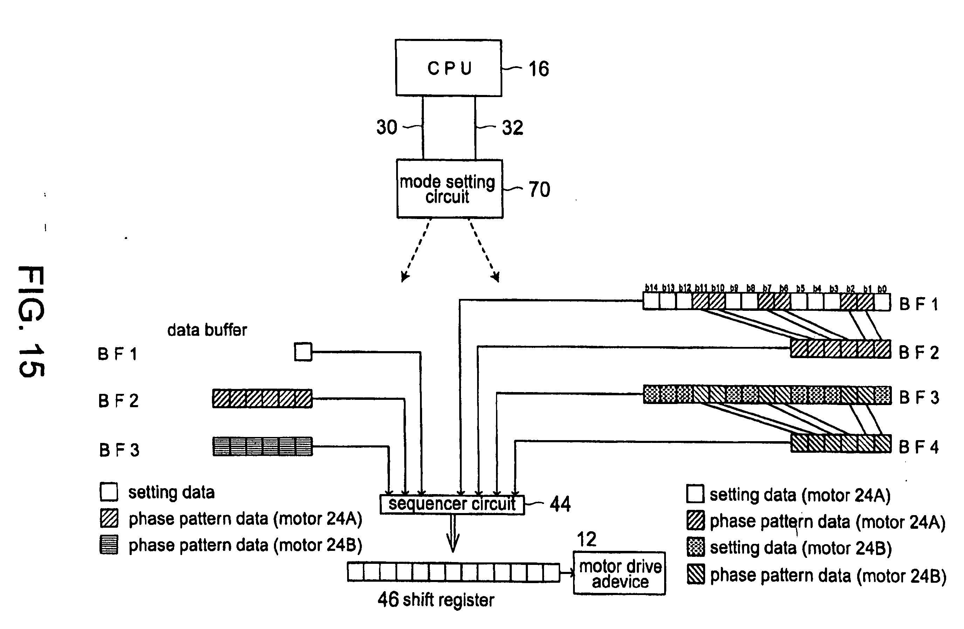

Fig. 15 shows the relationship between data elements stored in data buffers BF1 to BF4 in the present embodiment and motor control data compiled and written to the shift register 46 by the sequencer circuit 44 based on the buffered data. As shown in the figure, the sequencer circuit 44 in this embodiment has a mode setting circuit 70, and operates in a first or a second mode according to the operating mode setting of the mode setting circuit 70.

In the first operating mode, setting data is stored in data buffer BF1 as in the third embodiment (Fig. 7), for example, and phase pattern data for stepping motors 24A and 24B is stored in data buffer BF2 and data buffer BF3, respectively. The motor control data is generated based on the data in data buffers BF1 to BF3.

In the second mode data formatted identically to the motor control data is stored in data buffer BF1 and phase pattern data is stored in data buffer BF2 for stepping motor 24A, and data formatted identically to the motor control data is stored in data buffer BF3 and phase pattern data is stored in data buffer BF4 for stepping motor 24B, as in the fourth embodiment (Fig. 9) described above. The motor control data is then produced based on the data from data buffers BF1 to BF4.

The mode setting circuit 70 is connected to address bus 30 and data bus 32 of CPU 16, and the operating mode setting of the mode setting circuit 70 is controlled by the CPU 16.

This embodiment is therefore compatible with two types of motor drive devices 12 using different control data configurations. This embodiment of the invention can therefore flexibly adapt to changes in the type of motor drive device 12 due to a system design change by means of the CPU 16 changing the operating mode setting.

The embodiments of the present invention have been described with reference to the control of stepping motors by way of example, but the invention is not limited to this and can be applied to various other controls including the control of dc motors.

That is, the present invention can be used in applications in which a dc motor is driven by a drive device and the dc motor is controlled by serially transferring motor control data in a specific format to the drive device. The present invention can therefore also generate and serially transfer motor control data for dc motor control without putting any processing load on the CPU.

Furthermore, the invention has been described using a motor drive device 12 to drive one or two motors, but the invention can also be applied to a motor drive device 12 for driving three or more motors.

The format of the data elements and control data generated from the data elements as described specifically in the second to sixth embodiments above, should be understood to be exemplary only and the data format can be changed appropriately according to the specifications of the motor drive device 12.

## Claims

1. A motor control apparatus for controlling one or more motors by serially transferring motor control data to a motor drive device (12), comprising:
memory means (36) connected to an address bus (30) and a data bus (32) for storing basic control data;
data buffer means (40, 42) connected to said address bus (30) and said data bus (32);
DMA means (16a) for transferring said basic control data from said memory means (36) to the data buffer means (40, 42) by direct memory access; and
a dedicated hardware circuit (44) for converting said basic control data stored in the data buffer means (40, 42), to said motor control data and for serially transferring the motor control data to the motor drive device (12);
**characterized in that**
the data buffer means (40, 42) comprises
- a plurality of data buffers (BF1-BFn) each being provided for a respective one of plural types of basic control data and each having a respective memory address, and
- an address decoder (42) connected to said address bus (30) for outputting a write enable signal to a particular data buffer whose memory address corresponds to that output to the address bus; wherein each data buffer (BF1-BFn) is responsive to the write enable signal being output to it, to store the basic control data supplied to the data bus at that time; and
the hardware circuit (44) is adapted to start compiling and transferring said motor control data in response to basic control data being written to any one of the data buffers (BF1-BFn).

2. The apparatus claims 1, wherein the correlation between each bit of the basic control data stored in the data buffer means (40, 42) and each bit of said motor control data is predefined, and the hardware circuit (44) is adapted to compile the motor control data based on this correlation by writing the value of each bit in the data buffer means (40) to the corresponding bit position of the motor control data.

3. The apparatus of claims 1 or 2, wherein the motor drive device (12) is adapted to drive a plurality of motors (24A, 24B), and the data buffer means (40) comprises a plurality of data buffers (BF1-BF3; BF1-BF4) for each motor.

4. The apparatus of claim 3, wherein
the motor drive device (12) is configured to drive that one of said plurality of motors (24A, 24B) that is specified by a corresponding selection signal; and
the hardware circuit (44) includes means for generating the selection signal corresponding to the data buffer to which basic control data is written.

5. The apparatus of any of claims 1 to 4, further comprising flag setting means (R1-R4) for setting a transfer reservation flag individually for each data buffer (BF1-BF4) when basic control data is written to a respective data buffer; wherein
the hardware circuit (44) is adapted to check, after completing a serial data transfer, whether the transfer reservation flag is set for any data buffer and, if so, to start compiling and transferring the motor control data based on basic control data stored in the respective data buffer for which the transfer reservation flag is set, if the transfer reservation flag is set for any data buffer when a serial transfer of motor control data is completed.

6. The apparatus of claim 5, further comprising prioritizing means (60) for specifying a priority sequence for said data buffers (BF1-BF4); wherein the hardware circuit (44) is adapted to start compiling and transferring the motor control data based on basic control data stored in the data buffer having the highest priority specified by the prioritizing means when there are multiple data buffers for which the transfer reservation flag is set.

7. The apparatus of claim 6, further comprising a means (16) for setting the priority sequence specified by the prioritizing means (60).

8. The apparatus of any of claims 1 to 7, wherein
the hardware circuit (44) has a plurality of operating modes using different logics to compile the motor control data from basic control data stored in the data buffer means (40); and
the motor control apparatus further comprises means (70) for setting the operating mode of the hardware circuit (44).

9. Use of the apparatus of any of claims 1 to 8 for controlling one or more stepping motors (24A, 24B), wherein the basic control data includes data representing the phase pattern of voltage to be applied to the stepping motor.

10. A method of serially transferring motor control data to a motor drive device (12) for driving one or more motors (24A, 24B), comprising the steps of:
(a) transferring basic control data by direct memory access to data buffer means (40, 42); and
(b) using a dedicated hardware circuit (44) to convert said basic control data stored in the data buffer to the motor control data as a result of step (a), and to serially transfer the motor control data to the motor drive device (12);
**characterized in that**
step a) transferring each of plural types of basic control data to a respective data buffer of said data buffer means (40), and
step (b) comprising compiling and transferring said motor control data is performed in response to basic control data being written to any one of said data buffers in step (a).

## Patentansprüche

1. Motorsteuervorrichtung zum Steuern eines oder mehrerer Motoren durch serielles Übertragen von Motorsteuerdaten an eine Motoransteuervorrichtung (12), aufweisend:
eine Speichereinrichtung (36), die mit einem Adressbus (30) und einem Datenbus (32) verbunden ist und zum Speichern von Basissteuerdaten dient;
eine Datenpuffereinrichtung (40, 42), die mit dem Adressbus (30) und dem Datenbus (32) verbunden ist;
eine DMA-Einrichtung (16a) zum Übertragen der Basissteuerdaten von der Speichereinrichtung (36) an die Datenpuffereinrichtung (40, 42) durch direkten Speicherzugriff; und
eine dedizierte Hardwareschaltung (44) zum Umwandeln der in der Datenpuffereinrichtung (40, 42) gespeicherten Basissteuerdaten in die Motorsteuerdaten und zum seriellen Übertragen der Motorsteuerdaten an die Motoransteuervorrichtung (12);
**dadurch gekennzeichnet, dass**
die Datenpuffereinrichtung (40, 42) aufweist
- eine Mehrzahl von Datenpuffern (BF1-BFn), die je für einen jeweiligen von mehreren Typen von Basissteuerdaten vorgesehen sind und eine jeweilige Speicheradresse haben, und
- einen Adressdekoder (42), der mit dem Adressbus (30) verbunden ist, um ein Schreibfreigabesignal an einen speziellen Datenpuffer auszugeben, dessen Speicheradresse der an den Adressbus ausgegebenen Adresse entspricht; wobei jeder Datenpuffer (BF1-BFn) auf das an ihn ausgegebene Schreibfreigabesignal reagiert, um die Basissteuerdaten zu speichern, die dem Datenbus zu diesem Zeitpunkt zugeführt werden; und
die Hardwareschaltung (44) ausgebildet ist, um mit einem Kompilieren und Übertragen der Motorsteuerdaten als Reaktion darauf zu beginnen, daß Basissteuerdaten in irgend einen der Datenpuffer (BF1-BFn) geschrieben werden.

2. Vorrichtung nach Anspruch 1, bei der die Korrelation zwischen jedem Bit der in der Datenpuffereinrichtung (40, 42) gespeicherten Basissteuerdaten und jedem Bit der Motorsteuerdaten vordefiniert ist, und die Hardwareschaltung (44) ausgebildet ist, die Motorsteuerdaten basierend auf dieser Korrelation zu kompilieren, und zwar durch Schreiben des Wertes eines jeden Bit in der Datenpuffereinrichtung (40) an die entsprechende Bitposition der Motorsteuerdaten.

3. Vorrichtung nach Anspruch 1 oder 2, bei der die Motoransteuervorrichtung (12) ausgebildet ist, eine Mehrzahl von Motoren (24A, 24B) anzusteuern, und die Datenpuffereinrichtung (40) eine Mehrzahl von Datenpuffern (BF1-BF3; BF1-BF4) für jeden Motor aufweist.

4. Vorrichtung nach Anspruch 3, bei der
die Motoransteuervorrichtung (12) konfiguriert ist, denjenigen der Mehrzahl von Motoren (24A, 24B) anzusteuern, der durch ein entsprechendes Auswahlsignal bestimmt wird; und
die Hardwareschaltung (44) eine Einrichtung beinhaltet, welche das Auswahlsignal erzeugt, das dem Datenpuffer entspricht, in den Basissteuerdaten geschrieben werden.

5. Vorrichtung nach einem der Ansprüche 1 bis 4, die weiter eine Flag-Setzeinrichtung (R1-R4) aufweist, die ein Übertragungsreservierungs-Flag für jeden Datenpuffer (BF1-BF4) separat setzt, wenn Basissteuerdaten in einen jeweiligen Datenpuffer geschrieben werden; wobei
die Hardwareschaltung (44) ausgebildet ist, nach Abschluss einer seriellen Datenübertragung zu überprüfen, ob das Übertragungsreservierungs-Flag für irgend einen Datenpuffer gesetzt ist, und, falls dies der Fall ist, mit dem Kompilieren und Übertragen der Motorsteuerdaten basierend auf Basissteuerdaten, die im jeweiligen Datenpuffer gespeichert sind, für den das Übertragungsreservierungs-Flag gesetzt ist, zu beginnen, falls das Übertragungsreservierungs-Flag für irgend einen Datenpuffer gesetzt ist, wenn eine serielle Übertragung von Motorsteuerdaten abgeschlossen ist.

6. Vorrichtung nach Anspruch 5, welche weiter eine Prioritätszuweisungseinrichtung (60) zum Festlegen einer Prioritätsfolge für die Datenpuffer (BF1-BF4) festlegt; wobei die Hardwareschaltung (44) ausgebildet ist, mit einem Kompilieren und Übertragen der Motorsteuerdaten basierend auf Basissteuerdaten, die in dem Datenpuffer gespeichert sind, der die höchste durch die Prioritätszuweisungseinrichtung festgelegte Priorität aufweist, zu beginnen, wenn es mehrere Datenpuffer gibt, für die das Übertragungsreservierungs-Flag gesetzt ist.

7. Vorrichtung nach Anspruch 6, welche weiter eine Einrichtung (16) zum Setzen der Prioritätsfolge aufweist, die durch die Prioritätszuweisungseinrichtung (60) festgelegt ist.

8. Vorrichtung nach einem der Ansprüche 1 bis 7, bei der
die Hardwareschaltung (44) eine Mehrzahl von Betriebsmodi aufweist, welche unterschiedliche Logiken verwenden, um die Motorsteuerdaten aus den in der Datenpuffereinrichtung (40) gespeicherten Basissteuerdaten zu kompilieren; und
die Motorsteuervorrichtung weiter eine Einrichtung (70) zum Festlegen des Betriebsmodus der hardwareschaltung (44) aufweist.

9. Verwendung der Vorrichtung nach einem der Ansprüche 1 bis 8 zum Steuern eines oder mehrerer Schrittmotoren (24A, 24B), wobei die Basissteuerdaten Daten beinhalten, die das Phasenmuster der dem Schrittmotor zuzuführenden Spannung repräsentieren.

10. Verfahren zum seriellen Übertragen von Motorsteuerdaten an eine Motoransteuervorrichtung (12) zum Ansteuern eines oder mehrerer Motoren (24A, 24B), welches folgende Schritte umfasst:
(a) Übertragen von Basissteuerdaten durch direkten Speicherzugriff an eine Datenpuffereinrichtung (40, 42); und
(b) Verwenden einer dedizierten Hardwareschaltung (44), um die Basissteuerdaten, die als Ergebnis von Schritt (a) im Datenpuffer gespeichert sind, in Motorsteuerdaten umzuwandeln und die Motorsteuerdaten an die Motoransteuervorrichtung (12) seriell zu übertragen;
**dadurch gekennzeichnet, dass**
bei Schritt (a) ein jeweiliger von mehreren Typen von Basissteuerdaten an einen jeweiligen Datenpuffer der Datenpuffereinrichtung (40) übertragen wird, und
Schritt (b), der ein Kompilieren und Übertragen der Motorsteuerdaten beinhaltet, reagierend darauf durchgeführt wird, dass bei Schritt (a) Basissteuerdaten in irgend einen der Datenpuffer geschrieben werden.

## Revendications

1. Dispositif de commande de moteurs pour commander un ou plusieurs moteurs en transférant en séquence des données de commande de moteur à un dispositif d'attaque de moteurs (12), comprenant :
un moyen de mémoire (36) relié à un bus d'adresses (30) et à un bus de données (32) afin de mémoriser des données de commande de base,
un moyen de mémoires tampon de données (40, 42) relié au bus d'adresses (30) et au bus de données (32),
un moyen d'accès DMA (16a) destiné à transférer les données de commande de base du moyen de mémoire (36) au moyen de mémoires tampon de données (40, 42) par accès direct à la mémoire, et
un circuit matériel spécialisé (44) destiné à convertir les données de commande de base mémorisées dans le moyen de mémoires tampon de données (40, 42) en les données de commande de moteur, et destiné à transférer en séquence les données de commande de moteur au dispositif d'attaque de moteurs (12),
**caractérisé en ce que**
le moyen de mémoires tampon de données (40,42) comprend
- une pluralité de mémoires tampon de données (BF1 à BFn), chacune étant dotée d'un type respectif de multiples types de données de commande de base, et chacune présentant une adresse respective de mémoire, et
- un décodeur d'adresse (42) relié au bus d'adresses (30) afin de fournir en sortie un signal de validation d'écriture à une mémoire tampon particulière de données dont l'adresse de mémoire correspond à celle fournie en sortie au bus d'adresses, où chaque mémoire tampon de données (BF1 à BFn) réagit au signal de validation d'écriture qui lui est fourni en sortie, afin de mémoriser les données de commande de base appliquées sur le bus de données à ce moment, et
le circuit matériel (44) est conçu pour faire débuter la compilation et le transfert des données de commande de moteurs en réponse à des données de commande de base écrites sur l'une quelconque des mémoires tampon de données (BF1 à BFn).

2. Dispositif selon la revendication 1, dans lequel la corrélation entre chaque bit des données de commande de base mémorisées dans les moyens de mémoires tampon de données (40, 42) et chaque bit des données de commande de moteurs est prédéfinie, et le circuit matériel (44) est conçu pour compiler les données de commande de moteur sur la base de cette corrélation en écrivant la valeur de chaque bit dans le moyen de mémoires tampon de données (40) sur la position correspondante de bit des données de commande de moteur.

3. Dispositif selon la revendication 1 ou 2, dans lequel le dispositif d'attaque de moteurs (12) est conçu pour attaquer une pluralité de moteurs (24A, 24B), et le moyen de mémoires tampon de données comprend une pluralité de mémoires tampon de données (BF1 à BF3 ; BF1 à BF4) pour chaque moteur.

4. Dispositif selon la revendication 3, dans lequel
le dispositif d'attaque de moteurs (12) est configuré pour attaquer le moteur de ladite pluralité de moteurs (24A, 24B) qui est spécifié par un signal de sélection correspondant, et
le circuit matériel (44) comprend un moyen destiné à générer le signal de sélection correspondant vers la mémoire tampon de données sur laquelle sont écrites les données de commande de base.

5. Dispositif selon l'une quelconque des revendications 1 à 4, comprenant en outre un moyen d'établissement d'indicateurs (R1 à R4) afin d'armer individuellement un indicateur de réservation de transfert pour chaque mémoire tampon de données (BF1 à BF4) lorsque les données de commande de base sont écrites sur une mémoire tampon respective de données, dans lequel
le circuit matériel (44) est conçu pour effectuer un contrôle, après avoir achevé un transfert de données en séquence, de ce que l'indicateur de réservation de transfert est armé pour une quelconque mémoire tampon de données et, si c'est le cas, pour faire débuter la compilation et le transfert des données de commande de moteur sur la base des données de commande de base mémorisées dans la mémoire tampon respective de données pour laquelle l'indicateur de réservation de transfert est armé, si l'indicateur de réservation de transfert est armé pour une quelconque mémoire tampon de données lorsqu'un transfert en séquence de données de commande de moteur est achevé.

6. Dispositif selon la revendication 5, comprenant en outre un moyen d'établissement de priorités (60) destiné à spécifier une séquence de priorités pour les mémoires tampon de données (BF1 à BF4), dans lequel le circuit matériel (44) est conçu pour débuter la compilation et le transfert des données de commande de moteur sur la base des données de commande de base mémorisées dans la mémoire tampon de données présentant la priorité la plus haute, spécifiée par le moyen d'établissement de priorités, lorsqu'il existe des mémoires tampon multiples de données pour lesquelles l'indicateur de réservation de transfert est armé.

7. Dispositif selon la revendication 6, comprenant en outre un moyen (16) destiné à établir la séquence de priorités spécifiée par le moyen d'établissement de priorités (60).

8. Dispositif selon l'une quelconque des revendications 1 à 7, dans lequel
le circuit matériel (44) présente une pluralité de modes de fonctionnement utilisant des logiques différentes afin de compiler les données de commande de moteur à partir des données de commande de base mémorisées dans le moyen de mémoires tampon de données (40), et
le dispositif de commande de moteurs comprend en outre un moyen (70) destiné à établir le mode de fonctionnement du circuit matériel (44).

9. Utilisation du dispositif selon l'une quelconque des revendications 1 à 8, afin de commander un ou plusieurs moteurs pas à pas (24A, 24B), dans laquelle les données de commande de base comprennent des données représentant la séquence de phases de tension à appliquer au moteur pas à pas.

10. Procédé consistant à transférer en série des données de commande de moteur à un dispositif d'attaque de moteurs (12) afin d'attaquer un ou plusieurs moteurs (24A, 24B) comprenant les étapes consistant à :
(a) transférer les données de commande de base par accès direct à la mémoire à un moyen de mémoires tampon de données (40, 42), et
(b) utiliser un circuit matériel spécialisé (44) destiné à convertir les données de commande de base mémorisées dans la mémoire tampon de données en données de commande de moteur en tant que résultat de l'étape (a), et destiné à transférer en s&quence les données de commande de moteur au dispositif d'attaque de moteurs (12),
**caractérisé en ce que**
l'étape (a) transfère chaque type des multiples types de données de commande de base à une mémoire tampon respective de données du moyen de mémoires tampon de données (40), et
l'étape (b), comprenant la compilation et le transfert des données de commande de moteur, est effectuée en réponse à des données de commande de base écrites sur l'une quelconques des mémoires tampon de données dans l'étape (a).
